# EUROPEAN PATENT APPLICATION

(11) **EP 3 989 434 A1**
(43) Date of publication of application: **27.04.2022**
(21) Application number: 20839604.4
(22) Date of filing: 17.07.2020
(51) Int. Cl.: H02P 25/16, H02M 7/48, H02P 29/028

(54) **ROTATING MACHINE SYSTEM**

(30) Priority: 18.07.2019 JP 2019132822
(71) Applicant: Hosei University, Tokyo 102-8160 (JP); Zenmotor Inc., Tokyo, 107-0052 (JP)
(72) Inventor: YASUDA, Akira, Tokyo, 102-8160 (JP); SAWADA, Akihiko, Tokyo, 107-0052 (JP)
(74) Representative: Gramm, Lins & Partner Patent- und Rechtsanwälte PartGmbB
(86) International application number: PCT/JP2020/027891
(87) International publication number: WO 2021/010469

(57) **Abstract**

A rotating machine system (10) includes a rotating machine (1) including a plurality of coils (13u1 to 13W6) individually conducted in a plurality of phases, respectively, an operation direction determination means of determining an operation direction of the rotating machine (1) to a driving direction or a braking direction, a drive coil number determination means of determining a number of coils in each phase based on a drive operation instruction value (Scd) when the operation direction determined by the operation direction determination means is the driving direction, a drive coil selection means of selecting the coils (13u1 to 13W6) of the number of coils determined by the drive coil number determination means from the plurality of coils (13u1 to 13W6) in each phase, a drive control means of conducting the coils (13u1 to 13W6) selected by the drive coil selection means to perform drive control of the rotating machine (1), and a brake control means of performing brake control of the rotating machine (1) based on a brake operation instruction value (Scr) when the operation direction determined by the operation direction determination means is the braking direction.

## Description

### Technical Field

Embodiments of the present invention relate to a rotating machine system for controlling a rotating machine with a plurality of coils in each of a plurality of phases.

### Background Art

Conventionally, driver inverters to drive a motor with a plurality of coils in each phase are known. One of known control methods thereof uses, for example, a ΔΣ modulator (cf. Patent Literature 1).

Furthermore, some inverters to drive a synchronous motor are known to perform both power generation and regeneration therein, where generation and regeneration are arbitrarily switched (cf. Patent Literature 3). Furthermore, a technique of connecting single-phase inverters in series to form one phase, and connecting a battery to a neutral point for regeneration (cf. Patent Literature 4).

However, controlling a rotating machine (motor or the like) with a plurality of coils in each phase in a braking direction has not been discovered.

### Citation List

### Patent Literatures

Patent Literature 1: JP 5947287 B
Patent Literature 2: US 5872532 A
Patent Literature 3: JP 2016-167901 A
Patent Literature 4: JP 2005-184974 A

### Summary of Invention

An object of embodiments of the present invention is to provide a rotating machine system which controls a rotating machine with a plurality of coils in each phase in a braking direction.

In accordance with an aspect of the present invention, a rotating machine system includes a rotating machine including a plurality of coils individually conducted in a plurality of phases, respectively, an operation direction determination means of determining an operation direction of the rotating machine to a driving direction or a braking direction, a drive coil number determination means of determining a number of coils in each phase based on a drive operation instruction value when the operation direction determined by the operation direction determination means is the driving direction, a drive coil selection means of selecting the coils of the number of coils determined by the drive coil number determination means from the plurality of coils in each phase, a drive control means of conducting the coils selected by the drive coil selection means to perform drive control of the rotating machine, and a brake control means of performing brake control of the rotating machine based on a brake operation instruction value when the operation direction determined by the operation direction determination means is the braking direction.

### Brief Description of Drawings

FIG. 1 is a structural diagram illustrating a rotating machine system of a first embodiment of the present invention.
FIG. 2 is a structural diagram illustrating a structure of a coil selector of the first embodiment.
FIG. 3 is a circuit diagram illustrating a drive switch circuit of the first embodiment.
FIG. 4 is a circuit diagram illustrating a regeneration switch circuit of the first embodiment.
FIG. 5 is a circuit diagram illustrating the structure of a variation of the regeneration switch circuit of the first embodiment.
FIG. 6 is a circuit diagram illustrating a switch circuit of a second embodiment of the present invention.
FIG. 7 is a circuit diagram illustrating the structure of a switch circuit of a third embodiment of the present invention.
FIG. 8 is a circuit diagram illustrating a booster circuit of a fourth embodiment of the present invention.
FIG. 9 is a circuit diagram illustrating a regeneration control circuit of a fifth embodiment of the present invention.
FIG. 10 is a circuit diagram illustrating a drive control circuit of a sixth embodiment of the present invention.
FIG. 11 is a structural diagram illustrating the structure of a coil selection unit of the sixth embodiment.
FIG. 12 is a schematic view of a vector quantizer of the sixth embodiment.
FIG. 13 is a structural diagram illustrating a rotating machine of a seventh embodiment of the present invention.
FIG. 14 is a schematic diagram illustrating the structure of divided circuits of a rotating machine system of the seventh embodiment.
FIG. 15 is a schematic diagram illustrating the structure of divided circuits of a rotating machine system of an eighth embodiment of the present invention.
FIG. 16 is a schematic diagram illustrating the structure of divided circuits of a rotating machine system of a ninth embodiment of the present invention.
FIG. 17 is a schematic diagram illustrating the structure of the divided circuits of a rotating machine system of a tenth embodiment of the present invention.
FIG. 18 is a schematic diagram illustrating the structure of a rotating machine system of an eleventh embodiment of the present invention.
FIG. 19 is a circuit diagram illustrating the structure of a switcher of the eleventh embodiment.
FIG. 20 is a schematic diagram illustrating the structure of a rotating machine system of a twelfth embodiment of the present invention.

### Mode for Carrying Out Invention

### (First embodiment)

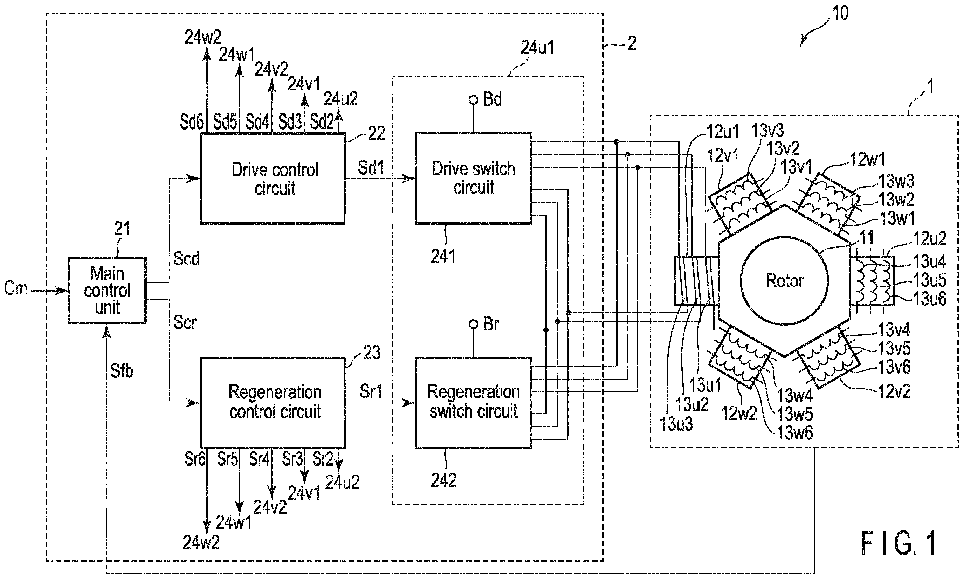

FIG. 1 is a structural diagram showing a rotating machine system 10 of a first embodiment of the present invention. The same reference number is added to the same element in the drawing, and explanation is omitted accordingly.

The rotating machine system 10 includes a rotating machine 1 and a control device 2.

In the description, the rotating machine 1 is mainly described as a 3-phase AC motor, but is not limited thereto. The rotating machine 1 may be any kind of rotating machine as long as two or more coils are provided for each of two or more phases and these coils are configured to be individually conductive. Accordingly, the rotating machine 1 may be a motor classified as a DC motor, an AC motor, a synchronous motor, or an induction motor. In addition, a motor having a coil in the stator (e.g., a brushless motor) is preferable from the viewpoint of manufacturing cost, etc., because the configuration is easier, while a motor having a coil in the rotor (e.g., a brushed motor) is also acceptable. Furthermore, the rotating machine 1 is not limited to an electric motor, but may be a generator. In that case, the generator generates electricity by drive operation.

The rotating machine 1 includes a rotor 11, six stator iron cores 12u1, 12u2, 12v1, 12v2, 12w1, and 12w2, six U-phase coils 13u1, 13u2, 13u3, 13u4, 13u5, and 13u6, six V-phase coils 13v1, 13v2, 13v3, 13v4, 13v5, and 13v6, and six W-phase coils 13w1, 13w2, 13w3, 13w4, 13w5, and 13w6. Here, all of the coils 13v1 to 13v6 are assumed to have the same number of turns. Therefore, in principle, all of the coils 13v1 to 13v6 apply the same voltage to the rotating machine 1, except for individual differences such as variations in manufacturing or wiring length.

The U-phase stator includes two U-phase stator iron cores 12u1 and 12u2, and six U-phase coils 13u1 to 13u6. The V-phase stator includes two V-phase stator iron cores 12v1 and 12v2, and six V-phase coils 13v1 to 13v6. The W-phase stator includes two W-phase stator iron cores 12w1 and 12w2, and six W-phase coils 13w1 to 13w6.

The two stator iron cores 12u1 to 12w2 of each phase are opposite to each other, and the rotor 11 is disposed between the two stator iron cores 12u1 to 12w2. Each of the stator iron core 12u1 to 12w2 includes three coils 13u1 to 13w6, which are not electrically connected to each other, wound thereon.

The control device 2 is a device for controlling the rotating machine 1 to operate in a driving direction or a regeneration direction (braking direction). The control device 2 is connected to each of the coils 13u1 to 13w6 by wiring. The control device 2 controls rotating machine 1 by conducting coils 13u1 to 13w6 individually.

The control device 2 includes a main control unit 21, a drive control circuit 22, a regeneration control circuit 23, and six switch circuits 24u1, 24u2, 24v1, 24v2, 24w1, and 24w2.

The main control unit 21 determines the operation direction of the rotating machine 1 to be either the driving direction or the regenerative direction, based on an operation instruction value Cm for controlling the rotating machine 1 and a feedback signal Sfb from the rotating machine 1. If the determined operation direction is the driving direction, the main control unit 21 generates a drive operation instruction value Scd for controlling the rotating machine 1 in the driving direction, and outputs the value Scd to the drive control circuit 22. If the determined operation direction is a regenerative direction, the main control unit 21 generates a regenerative operation instruction value Scr for controlling the rotating machine 1 in the regenerative direction, and outputs the value Scr to the regeneration control circuit 23.

The operation instruction value Cm may be set in the control device 2, or may be input from an external source such as an operator or a higher-level control system. The feedback signal Sfb may be any signal indicative of information such as position information of the rotor 11 or amount of electricity (voltage or current, etc.) applied to each of coils 13u1 to 13w6.

The drive control circuit 22 selects, based on the drive operation instruction value Scd received from the main control unit 21, the coil 13u1 to 13w6 to be conducted. For example, when a torque instruction value or a rotation speed instruction value is included in the drive operation instruction value Scd, the drive control circuit 22 selects the coils 13u1 to 13w6 to be conducted so as to drive the rotating machine 1 according to the torque instruction value or the rotation speed instruction value. The drive control circuit 22 sends drive switch control signals Sd1, Sd2, Sd3, Sd4, Sd5, and Sd6 for controlling the conduction of the selected coils 13u1 to 13w6 to each of the switch circuits 24u1 to 24w2. The drive switch control signals Sd1 to Sd6 include information for applying the coils 13u1 to 13w6 to be conducted in a predetermined voltage direction (positive voltage or negative voltage).

The selection of coils 13u1 to 13w6 by the drive control circuit 22 will be performed as follows.

The drive control circuit 22 determines the number of coils to be conducted for each phase, based on the drive operation instruction value Scd. The number of coils to be conducted increases, in principle, as the output of the rotating machine 1 becomes larger. When increasing the drive current to be applied to the rotating machine 1, the drive current is increased by increasing the number of coils to be conducted. Specifically, when the amplitude of the voltage applied to each phase of the rotating machine 1 becomes greater, the number of coils per phase to be conducted is increased. After determining the number of coils for each phase, the drive control circuit 22 selects the coils 13u1 to 13w6 to be conducted for each phase.

For example, the method of determining the number of coils by the drive control circuit 22 is as follows.

The drive control circuit 22 determines the drive current (torque current, etc.) to be applied to the rotating machine 1, based on the drive operation instruction value Scd. The drive control circuit 22 obtains a voltage to be applied to each phase of the rotating machine 1 in order to flow the determined drive current to the rotating machine 1. The drive control circuit 22 determines the number of coils per phase required to apply the determined voltage to each phase.

For example, to obtain the number of coils per phase from the voltage to be applied to each phase, a ΔΣ modulator is used to perform ΔΣ modulation. Specifically, for each phase, an analog signal indicating the voltage to be applied is input to the ΔΣ modulator. The ΔΣ modulator outputs a digital signal indicating an integer value from -6 to 6 corresponding to the input signal. Here, 6 which is the absolute value of the upper and lower limits, is the number of coils provided with each phase. In the numerical value indicated by the digital signal output from the ΔΣ modulator, the absolute value indicates the number of coils to be conducted in that phase, and the sign indicates the direction of application of the coils.

In addition to ΔΣ modulation, other types of PDM (pulse density modulation) such as PWM (pulse width modulation) or PFM (pulse frequency modulation) may be used. Furthermore, as long as an analog signal indicating an electrical quantity (such as voltage) can be converted to a digital signal such as indicating the number of coils, it is not limited to PDM.

After determining the number of coils for each phase, the drive control circuit 22 selects, for each phase, as many coils 13u1 to 13w6 as the number. The selection of the coils 13u1 to 13w6 may be performed in any way, but it is desirable to use an algorithm in which the frequency of use of all coils 13u1 to 13w6 is equalized. Such a selection method allows differences in the configuration of each coil 13u1 to 13w6 (for example, the length of wiring depending on the position of the coil) or individual manufacturing variations, the rotating machine 1 can be operated with these differences averaged out. In addition, as to the equipment such as switching elements corresponding to each coil 13u1 to 13w6, the degradation due to the frequency of use can also be equalized. For example, the selection method of the coils 13u1 to 13w6 is as follows.

The drive control circuit 22 may monitor each of the coils 13u1 to 13w6 is failed or not to avoid selecting a failed coil. Specifically, the current flowing in each of the coils 13u1 to 13w6 is monitored to detect break in each of the coils 13u1 to 13w6. For example, if the current flowing in a certain coil exceeds a set threshold, it detects that the coil is a short circuit failure. Also, if current is not flowing in a certain coil while current is controlled to flow in that coil, it detects that the coil is an open fault. Furthermore, a different type of fault from these may be detected. The fault detection of each of the coils 13u1 to 13w6 is, for example, performed when the control device 2 at the time of start-up, but it may be performed constantly or at any timing. When a failure of a coil under selection is detected, one or more new non-failed coils may be selected to take its place. This allows the magnetic flux generated by the failed coil to be compensated.

In the following, the structure or function to monitor each of the coils 13u1 to 13w6 and to avoid selecting a failed coil may not limited to a time of controlling by the drive control circuit 22 but may be added to controlling to select the coils 13u1 to 13w6 in any part of any embodiment, including the regeneration control circuit 23.

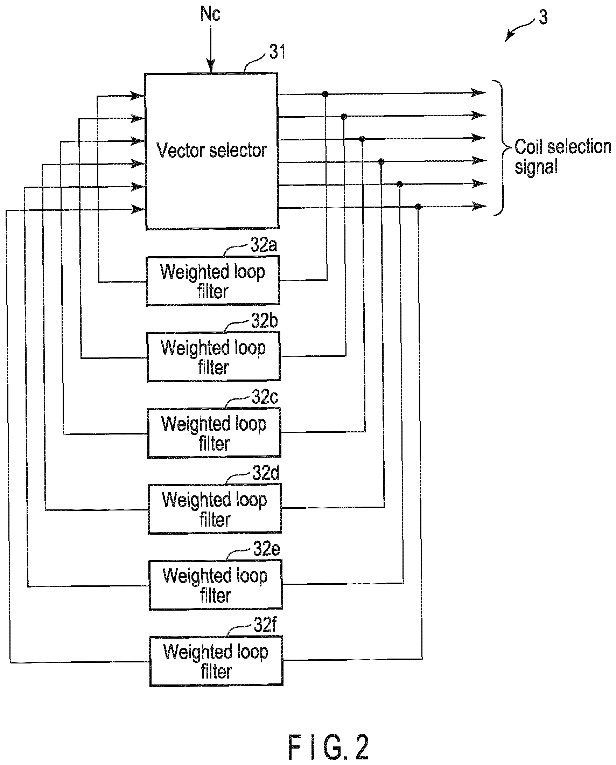

FIG. 2 is a structural diagram showing the structure of the coil selector 3.

The coil selector 3 is a selector that employs the noise shaping dynamic element matching method(NSDEM). The vector selector 31 and six weighted loop filters 32a, 32b, 32c, 32d, 32e, and 32f are provided with each phase. The weighted loop filters 32a to 32f are provided by the number of coils 13u1 to 13w6 provided with each phase. Since the configuration of each phase of the coil selector 3 is similar, hereinafter, the structure of U phase will be mainly described.

When the information indicating the number of Nc is input, the vector selector 31 selects coils 13u1 to 13u6 for the number Nc in order of priority, based on the selection information corresponding to each of the coils 13u1 to 13u6. The vector selector 31 outputs a coil selection signal to turn on a corresponding switching element to conduct the selected coils 13u1 to 13u6, and also outputs a signal indicating that the selection has been made to the weighted loop filters 32a to 32f corresponding to the selected coils 13u1 to 13u6.

The weighted loop filters 32a to 32f generate, based on the number of times they have been selected and the elapsed time since they were selected in the past, selection information to determine the priority in which each of the coils 13u1 to 13u6 is selected. Specifically, the selection information is set to be selected more easily if the fewer the number of times the selection has been made or the longer the elapsed time since the selection was made in the past.

For example, the weighted loop filters 32a to 32f includes a counter, an integrator, and the like. The integrator outputs a value that is larger as the elapsed time from the input of the information increases. Accordingly, when the value output from the integrator increases, the priority of the selection information is set lower so as to make it difficult to be selected. In addition, the counter indicates the number of times the selection has been made.

Therefore, when the value of the counter increases, the priority of the selection information is lowered so that it becomes difficult to be selected. The weighted loop filters 32a to 32f output the selection information as an output signal to the vector selector 31.

Based on the priority order obtained as above, the vector selector 31 selects the U phase coils 13u1 to 13u6 to be conductive. In this way, the vector selector 31 is selected by the NSDEM.

The regeneration control circuit 23 selects the coils 13u1 to 13w6 to be conducted, based on the regenerative operation instruction value Scr received from the main control unit 21. For example, if the regenerative operation instruction value Scr includes a brake torque instruction value for controlling the brake torque, the regenerative control circuit 23 selects coils 13u1 to 13w6 to be conducted so that the rotating machine 1 is operated regeneratively according to the brake torque instruction value. The method of determining the number of coils of each phase and the method of selecting coils 13u1 to 13w6 in the regeneration control circuit 23 are the same as in the drive control circuit 22. Therefore, the number of coils may be determined by a ΔΣ modulator or the coils may be selected by NSDEM. In addition, the regeneration control circuit 23 may always conduct all of the coils 13u1 to 13w6.

The regeneration control circuit 23 sends regeneration switch control signals Sr1, Sr2, Sr3, Sr4, Sr5, and Sr6 to control the conduction of the selected coils 13u1 to 13w6 to each of switch circuits 24u1 to 24 w2. The regeneration switch control signals Sr1 to Sr6 include information used to generate the coils 13u1 to 13w6 to be conducted in a predetermined voltage direction (positive voltage or negative voltage). The voltage direction may always be a constant direction (e.g., positive voltage).

Switch circuits 24u1 to 24w2 are disposed to correspond to each stator (each stator iron core 12u1 to 12w2). Since the structure of each switch circuit 24u1 to 24w2 is similar, the structure of one switch circuit 24u1 will be described.

The switch circuit 24u1 includes a drive switch circuit 241 and a regeneration switch circuit 242.

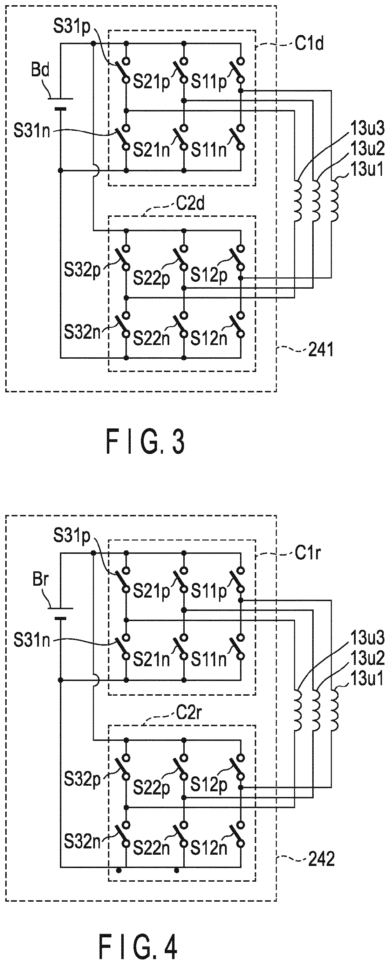

FIG. 3 is a circuit diagram showing the structure of the drive switch circuit 241.

The drive switch circuit 241 includes two three-phase bridge circuits C1d, C2d and a drive power source Bd. The two three-phase bridge circuits C1d and C2d are connected in parallel to the drive power source Bd. The drive power source Bd may be provided for each of the switch circuits 24u1 to 24w2, or it may be provided commonly for all of the switch circuits 24u1 to 24w2.

The first three-phase bridge circuit C1d includes six switching elements Slip, S11n, S21p, S21n, S31p, and S31n. Positive electrode side switching elements Slip, S21p, and S31p are paired with negative electrode side switching elements S11n, S21n, and S31n, respectively. The two paired switching elements Slip to S31n are connected in series, respectively. Three pairs of series-connected switching elements Slip to S31n are connected in parallel with the drive power source Bd, respectively. The connection points of each of the three sets of series-connected switching elements Slip to S31n connected in series are connected to one terminal of each of the three coils 13u1 to 13u3, respectively.

The second three-phase bridge circuit C2d includes six switching elements S12p, S12n, S22p, S22n, S32p, and S32n. The switching elements S12p to S32n have the same structure as in the first three-phase bridge circuit C1d. Each connection point of the three sets of series-connected switching elements S12p to S32n is connected to the other terminal which is different from the terminal connected to the first three-phase bridge circuit C1d in the three coils 13u1 to 13u3.

Switching elements Slip to S31n turned on by the first three-phase bridge circuit C1d and switching elements S12p to S32n turned on by the second three-phase bridge circuit C2d are a combination by which DC voltage from drive power source Bd is applied to the three coils 13u1 to 13u3 individually in the positive or negative direction. For example, when applying a voltage in the positive direction to the U-phase first coil 13u1, the positive electrode side switching element Slip of the first three-phase bridge circuit C1d and the negative electrode side switching element S12n of the second three-phase bridge circuit C2d are turned on. When applying a voltage in the negative direction to the U-phase first coil 13u1, the negative electrode side switching element S11n of the first three-phase bridge circuit C1d and the positive electrode side switching element S12p of the second three-phase bridge circuit C2d are turned on. As for the direction in which the voltage is applied, either the positive direction or the negative direction may be used.

FIG. 4 is a circuit diagram illustrating the structure of the regeneration switch circuit 242.

The regeneration switch circuit 242 includes two three-phase bridge circuits C1r and C2r and a regeneration power source Br.

The two three-phase bridge circuits C1r and C2r are connected in parallel to the regeneration power source Br. The regeneration power source Br may be provided with each of the switch circuits 24u1 to 24w2, or it may be provided in common with all switch circuits 24u1 to 24w2. The regeneration power source Br is, for example, a secondary battery, but may also be a load operated by the regeneration power from the rotating machine 1. The structure of the three-phase bridge circuits C1r and C2r is the same as that of the three-phase bridge circuits C1d and C2d of the drive switch circuit 241.

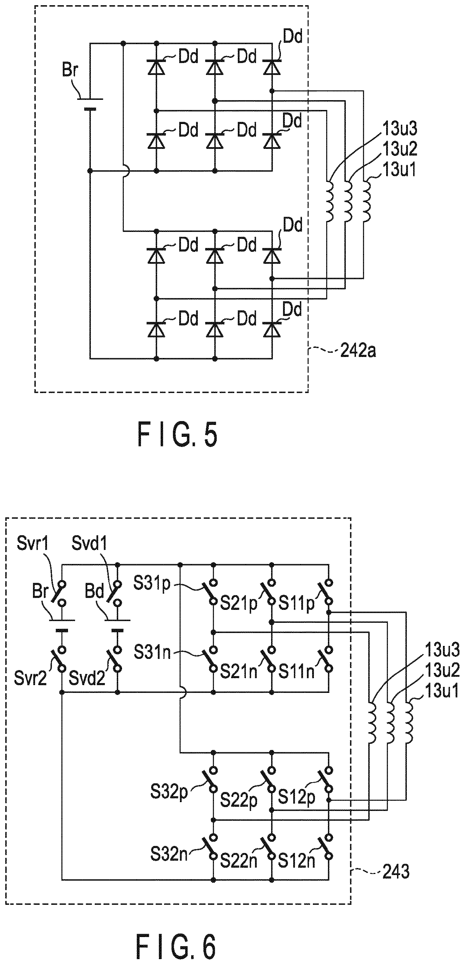

FIG. 5 is a circuit diagram illustrating a structure of a variation of the regeneration switch circuit 242a of the present embodiment. In the present embodiment, instead of the regeneration switch circuit 242 shown in FIG. 4, the regeneration switch circuit 242a may be provided.

The regeneration switch circuit 242a of the variation is the regeneration switch circuit shown in FIG. 4 with all of the switching elements Slip to S31n, and S12p to S32n are replaced with diodes Dd. In other words, the regeneration switch circuit 242a is a rectifier circuit which converts AC power into DC power.

When the operation direction of rotating machine 1 is determined to be braking direction, regeneration switch circuit 242a is electrically connected to each coil 13u1 to 13u3 by switches and the like. By making the same structure for each phase, all coils 13u1 to 13w6 conduct during braking operation. Therefore, all the coils 13u1 to 13w6 are used to generate regeneration power is generated. This reduces the current burden of each coil 13u1 to 13w6, and loss of the regeneration power is reduced.

According to the present embodiment, with the structure to control the rotating machine 1 in either the driving direction or the braking direction, it is possible to control the rotating machine 1 in both the driving direction and the braking direction.

### (Second embodiment)

FIG. 6 is a circuit diagram showing a switch circuit 243 of a second embodiment of the present invention.

The switch circuit 243 includes the drive switch circuit 241 of the first embodiment and the regeneration switch circuit 242 of the first embodiment as a common circuit. Specifically, the switch circuit 243 is the drive switch circuit 241 of the first embodiment with a regeneration power source Br added thereto, and four switches Svd1, Svd2, Svr1, and Svr2 added thereto to switch the power source to both ends (positive electrode terminal and negative electrode terminal) of the drive power source Bd and the regeneration power source Br respectively.

When the operation direction of rotating machine 1 is determined to be driving direction, the switches Svd1 and Svd2 on both ends of the drive power source Bd are turned on, and the switches Svr1 and Svr2 at both ends of the power source Br are turned off. When the operation direction of rotating machine 1 is determined to be the regenerative direction, switches Svd1 and Svd2 on both ends of the power source Bd are turned off and switches Svr1 and Svr2 on both ends of the power source Bd are turned on.

Note that the four switches Svd1 to Svr2 may be controlled in any way by the controller 2. For example, the four switches Svd1 to Svr2 may be switched on/off by control signals from the main control unit 21 as switching elements.

According to the present embodiment, with the switch circuit 243 provided instead of the drive switch circuit 241 and the regeneration switch circuit 242 in the first embodiment, in addition to the effect of the first embodiment, the control device 2 can be made smaller or the manufacturing cost can be reduced.

### (Third embodiment)

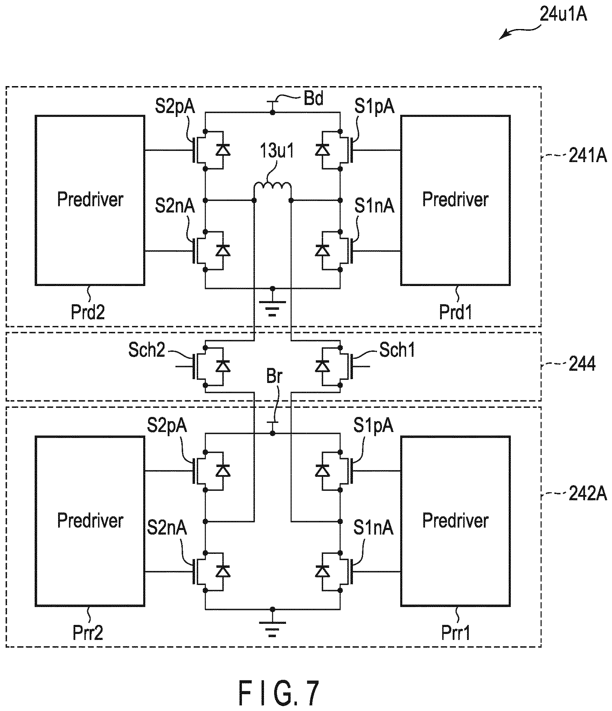

FIG. 7 is a circuit diagram showing a structure of the switch circuit 24u1A of the third embodiment of the present invention. In FIG. 7, a structure for one phase of a three-phase structure of the switch circuit 24u1A (a structure corresponding to one coil 13u1) is shown. Here, the structure for one phase is mainly described, and the structure for three phases is assumed to be similarly structured.

In this embodiment, the switch circuit 24u1 in the first embodiment is replaced with the switch circuit 24u1A shown in FIG. 7. The other points are the same as in the first embodiment.

The switch circuit 24u1A includes a drive switch circuit 241A, regeneration switch circuit 242A, and switching circuit 244.

The drive switch circuit 241A includes four switching elements SlpA, S1nA, S2pA, S2nA, two pre-drivers Prd1, and Prd2, and a drive power source Bd.

The switching elements SlpA to S2nA are semiconductor elements including diodes connected in antiparallel. The four switching elements SlpA to S2nA are connected in pairs in series, and the two pairs of series-connected switching elements SlpA to S2nA are connected in parallel.

The pre-drivers Prd1 and Prd2 turn on/off two switching elements SlpA to S2nA, respectively, based on the drive switch control signal Sd1 from the drive control circuit 22. Note that, four pre-drivers Prd1 and Prd2 may be provided to correspond to each switching element SlpA to S2nA.

The drive power source Bd is connected in parallel with two sets of series-connected switching elements SlpA to S2nA connected in parallel. It is connected with two sets of series-connected switching elements SlpA to S2nA so that a voltage is applied to both ends of each of the two sets of series-connected switching elements SlpA to S2nA. A coil 13u1 is connected between the respective connection points of the two sets of series-connected switching elements SlpA to S2nA.

The regeneration switch circuit 242A includes four switching elements SlpA, S1nA, S2pA, S2nA, two pre-drivers Prr1, and Prr2, and a regeneration power source Br.

The structure of the switching elements SlpA to S2nA and the regeneration power source Br are the same as those of the drive switch circuit 241A.

The pre-drivers Prr1 and Prr2 turn on/off the two switching elements SlpA to S2nA, respectively, based on the regeneration switch control signal Sr1 from the regeneration control circuit 23. The other points are the same as the pre-drivers Prd1 and Prd2 of the drive switch circuit 241A.

The switching circuit 244 is a circuit for switching between the drive switch circuit 241A and the regeneration switch circuit 242A. The switching circuit 244 includes two switching elements Sch1 and Sch2. Each of the switching elements Sch1 and Sch2 is disposed between each connection point of the two sets of series-connected switching elements S1pA to S2nA of the switch circuit 242A and two terminals of both ends of coil 13u1. The respective connection points of the two sets of series-connected switching elements SlpA to S2nA of the drive switch circuit 241A are connected directly to both ends of the coil 13u1 without connecting to a switching circuit 244.

When the rotating machine 1 is operated in the driving direction, the two switching elements Sch1 and Sch2 are turned off. When the rotating machine 1 is operated in the regenerative direction, the two switching elements Sch1 and Sch2 are turned on.

According to the present embodiment, in addition to the effects of the first embodiment, by installing the switch circuit 24u1A, the drive switch circuit 241A and regeneration switch circuit 242A can be easily switched.

Furthermore, with the switching circuit 244 for switching between the drive switch circuit 241A and the regeneration switch circuit 242A, the effect of parasitic diodes in the semiconductor can be suppressed.

### (Fourth embodiment)

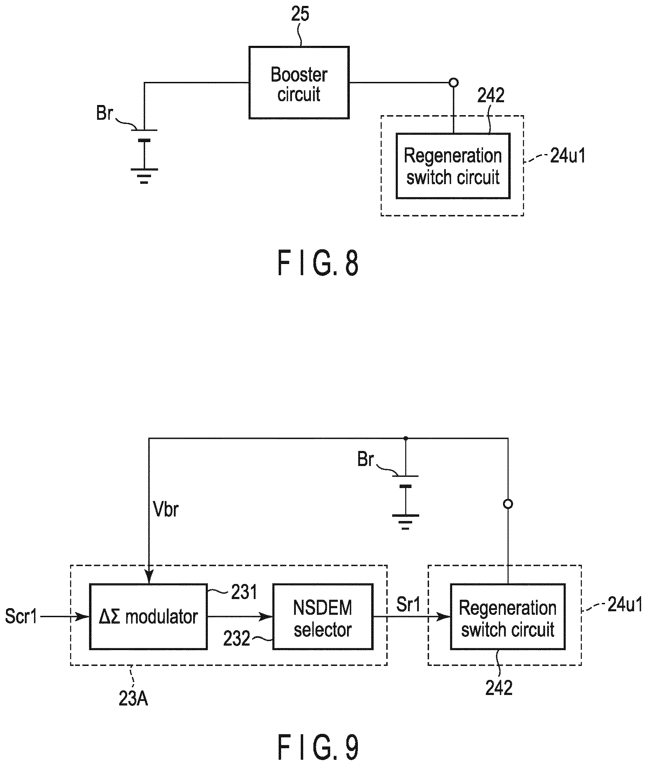

FIG. 8 is a circuit diagram illustrating the structure of the booster circuit 25 of the fourth embodiment of the present invention.

This embodiment is a structure in which a boost circuit 25 is added to the first embodiment. The other points are the same as in the first embodiment.

The booster circuit 25 is disposed between a regeneration switch circuit 242 of the switch circuit 24u1 and the regeneration power source Br. When the regeneration power source Br is common to all the switch circuits 24u1 to 24w2, the booster circuit 25 may be provided in each of the switch circuits 24u1 to 24w2, or it may be provided in common to all switch circuits 24u1 to 24w2.

The booster circuit 25 boosts the regeneration power from the regeneration switch circuit 242 to a voltage suitable for the regeneration power source Br. The booster circuit 25 may boost the voltage to a predetermined voltage, or may boost the voltage based on an instruction value from an external source such as the regeneration control circuit 23. Furthermore, the booster circuit 25 may also be a circuit that can also step down the voltage. Furthermore, any specific circuit structure of the booster circuit 25 may be used.

According to the present embodiment, in addition to the effect of the first embodiment, the regeneration power can be efficiently supplied to the regeneration power source Br with the booster circuit 25.

### (Fifth embodiment)

FIG. 9 is a circuit diagram showing the structure of a regeneration control circuit 23A of the fifth embodiment of the present invention.

In the present embodiment, a regeneration control circuit 23A is provided instead of the boost circuit 25 in the fourth embodiment. The other points are the same as in the fourth embodiment.

Since the regeneration control circuit 23A has the same basic structure as the regeneration control circuit 23 of the first embodiment, the elements difference from the first embodiment will be mainly explained.

The regeneration control circuit 23A includes a ΔΣ modulator 231 and an NSDEM selector 232.

To the ΔΣ modulator 231, a regenerative operation instruction value Scr including a brake torque instruction value and a voltage value Vbr applied to the regeneration power source Br are input. The ΔΣ modulator 231 determines the number of coils per phase to be conducted by the ΔΣ modulation so that the rotating machine 1 is operated to follow the brake torque instruction value and the voltage value Vbr becomes a predetermined voltage value. The ΔΣ modulator 231 transmits the determined number of coils for each phase to the NSDEM selector 232. The method of determining the number of coils per phase by ΔΣ modulation is the same as that of the first embodiment. The predetermined voltage value for controlling the voltage value Vbr may be a predetermined voltage value or may be given as an instruction value from an external source such as the regeneration control circuit 23.

The NSDEM selector 232 selects, based on the number of coils for each phase determined by the ΔΣ modulator 231, coils 13u1 to 13w6 to be conducted for each phase by the NSDEM. The method of selecting coils 13u1 to 13w6 by the NSDEM are selected in the same manner as in the first embodiment. The NSDEM selection unit 232 transmits the regeneration switch control signals Sr1 to Sr6 for controlling conducting of the selected coils 13u1 to 13w6 to each of the switch circuits 24u1 to 24w2.

According to the present embodiment, by providing the regeneration control circuit 23A, even if the booster circuit 25 of the fourth embodiment is not provided, the same effect as that of the fourth embodiment can be obtained.

### (Sixth embodiment)

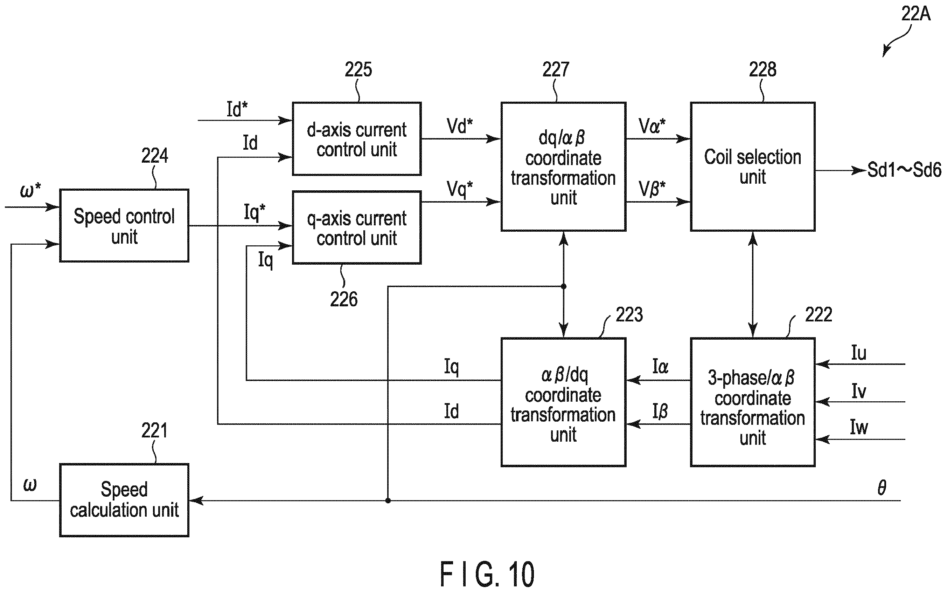

FIG. 10 is a circuit diagram showing the structure of a drive control circuit 22A according to the sixth embodiment of the present invention.

In the present embodiment, the drive control circuit 22 is replaced with the drive control circuit 22A in the first embodiment. The other points are the same as in the first embodiment.

The drive control circuit 22A includes a speed calculation unit 221, a 3-phase/αβ coordinate transformation unit 222, αβ/dq coordinate transformation unit 223, speed control unit 224, d-axis current control unit 225, q-axis current control unit 226, dq/αβ coordinate transformation unit 227, and coil selection unit 228.

The speed calculation unit 221 receives a rotation angle (rotation phase) θ from the rotating machine 1. The rotation angle θ may be a measured value by an angle sensor, or an estimate value in sensorless control. The speed calculation unit 221 calculates a rotation speed ω based on the rotation angle θ. The speed calculation unit 221 outputs the calculated rotational speed ω to the speed control unit 224. Note that, the rotating machine 1 may include a sensor for detecting the rotational speed ω, such as a resolver. In that case, the speed calculation unit 221 may use the rotational speed ω received from the sensor as it is.

The three-phase/αβ coordinate transformer 222 receives the three-phase alternating current values Iu, Iv, and Iw flowing as a drive current to the rotating machine 1. The three-phase current values Iu, Iv, and Iw may be measured in any way. The three-phase/αβ coordinate transformation unit 222 converts the received three-phase current values Iu, Iv, and Iw into two-phase current values Iα and Iβ in the αβ-axis coordinate system. The three-phase/αβ coordinate transformation unit 222 outputs the obtained two-phase current values Iα, Iβ to the αβ/dq coordinate transformation unit 223.

The αβ/dq coordinate transformation unit 223 receives the rotation angle θ and the two-phase current values Iα and Iβ calculated by the three-phase/αβ coordinate transformation unit 222. The αβ/dq coordinate transformation unit 223 converts the current values Iα and Iβ of the two phases into the dq-axis current values Id and Iq of the rotational coordinate system, based on the rotation angle θ. The αβ/dq coordinate transformation unit 223 outputs the obtained d-axis current value Id to the d-axis current control unit 225, and the obtained q-axis current value Iq to the q-axis current control unit 226.

The speed control unit 224 receives a rotation speed instruction value ω* included in the drive operation instruction Scd output from the main control unit 21 and the rotation speed ω calculated by the speed calculation unit 221. The speed control unit 224 calculates the q-axis current value instruction value Iq* so that the rotational speed ω follows the rotational speed instruction value ω*. The speed control unit 224 outputs the calculated q-axis current value instruction value Iq* to the q-axis current control unit 226.

The d-axis current control unit 225 receives the d-axis current instruction value Id* and the d-axis current value Id calculated by the αβ/dq coordinate transformation unit 223. The d-axis current instruction value Id* may be included in the drive operation instruction value Scd, or may be a predetermined value. The d-axis current control unit 225 calculates the d-axis voltage instruction value Vd* so that the d-axis current value Id follows the d-axis current instruction value Id*. The d-axis current control unit 225 outputs the calculated d-axis voltage instruction value Vd* to the dq/αβ coordinate transformation unit 227.

The q-axis current control unit 226 receives the q-axis current instruction value Iq* calculated by the speed control unit 224 and the q-axis current value Iq calculated by the αβ/dq coordinate transformation unit 223. The q-axis current control unit 226 calculates the q-axis voltage instruction value Vq* so that the q-axis current value Iq follows the q-axis current instruction value Iq*. The q-axis current control unit 226 outputs the calculated q-axis voltage instruction value Vq* to the dq/αβ coordinate transformation unit 227.

The dq/αβ coordinate transformation unit 227 receives the rotation angle θ, the d-axis voltage instruction value Vd* calculated by the d-axis current control unit 225, and the q-axis voltage instruction value Vq* calculated by the q-axis current control unit 226. The dq/αβ coordinate transformation unit 227 converts the dq-axis voltage instruction values Vd* and Vq* into two-phase voltage instruction values Vα* and Vβ* of the αβ coordinate system, based on the rotation angle θ.

The coil selection unit 228 receives the αβ-axis voltage instruction values Vα* and Vβ* calculated by the dq/αβ coordinate transformation unit 227. For example, the αβ-axis voltage instruction values Vα* and Vβ* are instruction values indicating an AC voltage represented by a sine wave. The coil selection unit 228 selects coils 13u1 to 13w6 to be conducted for each phase and determines the direction of application of the voltage of each coil 13u1 to 13w6, based on the αβ-axis voltage instruction values Vα* and Vβ*. The coil selection unit 228 generates drive switch control signals Sd1 to Sd6 based on the determined contents, and sends the signals to the corresponding switch circuits 24u1 to 24w2.

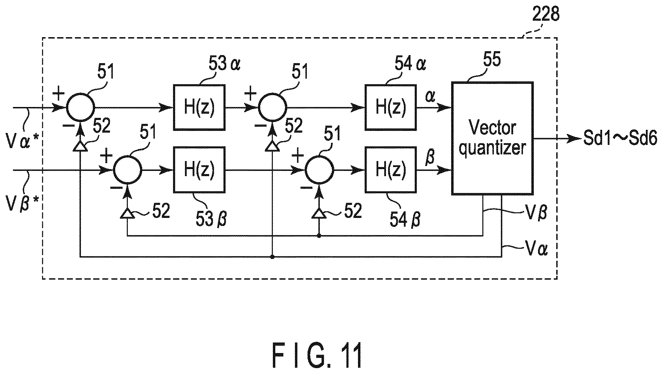

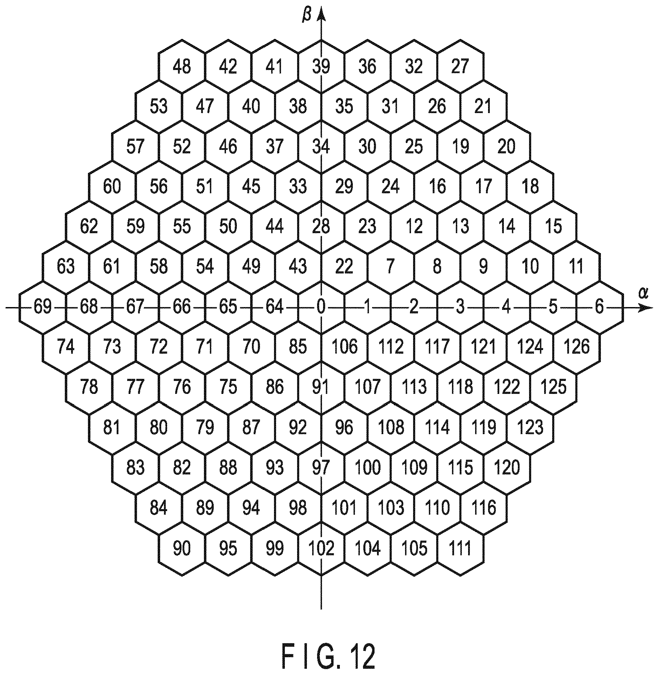

FIG. 11 is a schematic diagram of the coil selection unit 228 of the present embodiment. FIG. 12 is a schematic diagram of the vector quantizer 55 of the present embodiment.

The coil selection unit 228 includes four integrators 53α, 53β, 54α, and 54β, four subtractors 51, four counters 52, and a vector quantizer 55. For example, the formula for the integration of each integrator 53α-54β is H(z)=z^(-1)/(1-Z^(-1)).

The α-axis voltage value Vα or β-axis voltage value Vβ determined by the vector quantizer 55 is input to the minus side of each of the subtractors 51 via the counters 52, respectively, as a feedback value.

The difference in which the α-axis voltage value Vα is subtracted from the α-axis voltage instruction value Vα* by the subtractor 51 is input to the α-axis first stage integrator 53. The α-axis first stage integrator 53α integrates the input difference and outputs the obtained integral value.

The difference in which the α-axis voltage value Vα is subtracted from the integral value output from the α-axis first stage integrator 53α by the subtractor 51 is input to the α-axis second stage integrator 54α. The α-axis second stage integrator 54α integrates the input difference and outputs the obtained integral value as the α-axis value α to the vector quantizer 55.

The difference in which the β-axis voltage value Vβ is subtracted from the β-axis voltage instruction value Vβ* by the subtractor 51 is input to the β-axis first stage integrator 53β. The β-axis first stage integrator 53β integrates the input difference and outputs the obtained integral value.

The difference in which the β-axis voltage value Vβ is subtracted from the integral value output from the β-axis first-stage integrator 53β by the subtractor 51 is input to the β-axis second-stage integrator 54β. The β-axis second-stage integrator 54β integrates the input difference, and outputs the obtained integral value as the β-axis value to the vector quantizer 55. The filter portion related to H(z) in FIG. 11 may have three stages of H(z), and may also be an arbitrary transfer function. For example, by using a bandpass characteristic for H(z), it is possible to improve the characteristics of a specific frequency.

Here, the α-axis value α and the β-axis value β are obtained by integrating them in two stages, respectively, but they may be obtained by integrating them in one stage. That is, the second-stage integrators 54α and 54β may not be provided, and the integral values obtained by the first-stage integrators 53α and 53β are used for the α-axis value α and β-axis value β to be output to the vector quantizer 55.

The vector quantizer 55 selects coils 13u1 to 13w6 to be conducted and determines the direction of application of the voltage of the selected coils 13u1 to 13w6, based on the input α-axis value α and β-axis value β.

As shown in FIG. 12, an αβ axis coordinate divided by subdivided regions like a honeycomb structure is pre-set in the vector quantizer 55. Here, the subdivided regions are shown as small hexagons and are divided into 127 regions with serial numbers from 0 to 126 assigned. In each region, the number of phases of coils 13u1 to 13w6 to be conducted and the direction of voltage application are determined. For example, the region located at each vertex of a large hexagonal shape showing the entire area of αβ axis coordinates corresponds to a case where the voltage is applied in the positive or negative direction to all six coils 13u1 to 13w6 per phase.

The vector quantizer 55 determines to which subdivided region the input α-axis value α and β-axis value β belong. The vector quantizer 55 determines the coils 13u1 to 13w6 and the direction of application of the voltage to be conducted, based on the determined region. Based on the determined contents, the vector quantizer 55 generates drive switch control signals Sd1 to Sd6, and sends the signals to the switch circuits 24u1 to 24w2 respectively. Furthermore, the vector quantizer 55 outputs the α-axis voltage value Vα and the β-axis voltage value Vβ corresponding to the determined region as feedback values to the subtractors 51, respectively.

According to the present embodiment, in addition to the effect of the first embodiment, by using the vector quantizer 55, the torque and magnetic flux of the rotating machine 1 can be controlled by the vector control using the dq-axis rotation coordinate system.

### (Seventh embodiment)

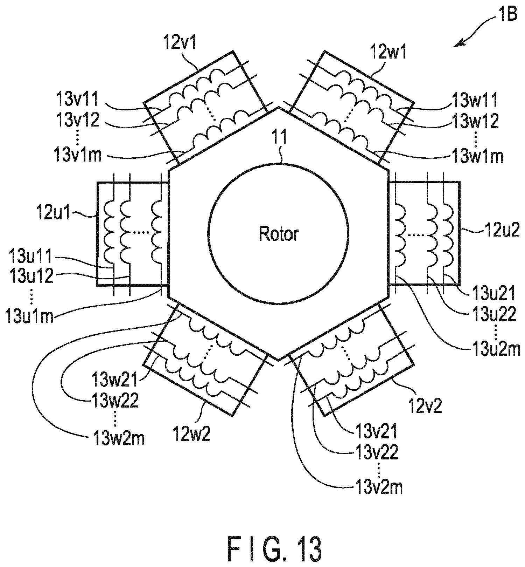

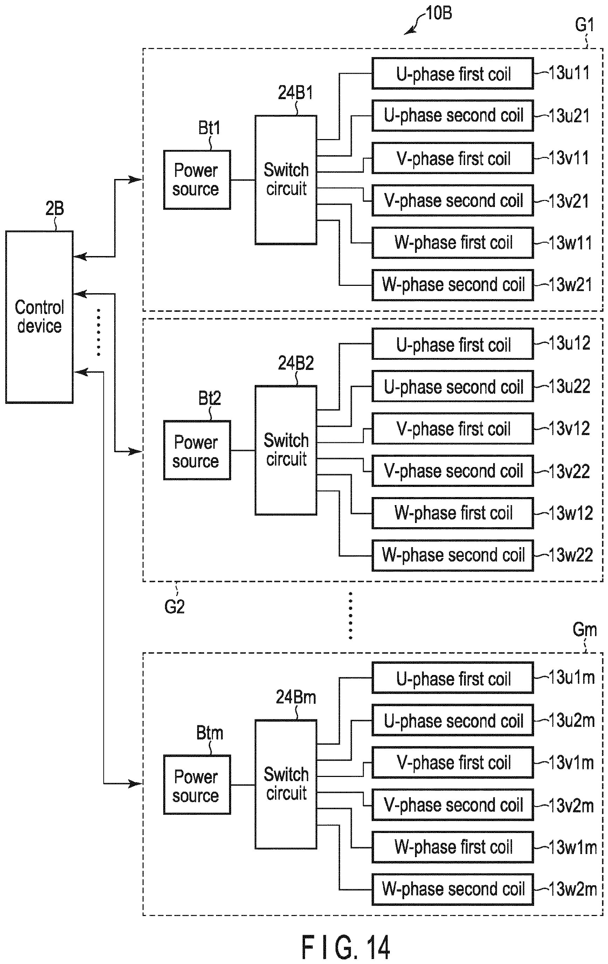

FIG. 13 is a structural diagram of a rotating machine 1B according to a seventh embodiment of the present invention. FIG. 14 is a schematic diagram showing the structure of the dividing circuits G1 to Gm in the rotating machine system 10B according to the present embodiment.

In FIG. 14, the connection lines between the switch circuits 24B1 to 24Bm and the power sources Bt1 to Btm or the coils 13u11 to 13w2m are simplified as a single wire, but in fact, as in other embodiments (e.g., FIG. 3 or FIG. 4), they are connected by two wires, one on the positive electrode side and the other on the negative electrode side (polarity side and reference side). Furthermore, the power source includes a controller and a charger as necessary. In the following figures, the same is shown in simplified form.

A rotating machine system 10B is the rotating machine system 10 of the first embodiment, in which the configuration with switch circuits 24u1 to 24w2 and the rotating machine 1 are replaced with a configuration with the divided circuits G1 to Gm. The other points are the same as in the first embodiment.

The rotating machine 1B is a rotating machine 1 of the first embodiment, wherein each stator iron core 12u1 to 12w2 is provided with m coils 13u11 to 13w2m are provided. All of the coils 13u11 to 13w2m apply the same voltage to the rotating machine 1B as in the first embodiment, except for individual differences. The other points are the same as in the first embodiment of rotating machine 1. Here, the rotating machine 1B is described in terms of a structure with six stators (three phases × 2), but any number of stators may be provided. For example, the number of stators is a multiple of the number of phases of electricity applied to the rotating machine 1B.

The U-phase first stator iron core 12u1 includes m U-phase first coils 13u11, 13u12, ..., 13ulm. The U-phase second stator iron core 12u2 includes m U-phase second coils 13u21, 13u22, ..., 13u2m. The V-phase first stator iron core 12v1 includes m V-phase first coils 13v11, 13v12, ..., 13vlm. The V-phase second stator iron core 12v2 includes m V-phase second coils 13v21, 13v22, ..., 13v2m. The W-phase first stator iron core 12w1 includes m W-phase first coils 13w11, 13w12, ..., 13w1m. The W-phase second stator iron core 12w2 includes m W-phase second coils 13w21, 13w22, ..., 13w2m.

The divided circuits G1 to Gm are divided so as to group the main electric circuits of the rotating machine system 10B in order to increase the resistance of the rotating machine system 10B to faults. Here, the number of the divided circuits G1 to Gm is the number of coils 13u 11 to 13w2m in each stator, that is, m; however, any number which is two or more may be used.

The divider circuits G1, G2, ..., Gm each include one power source Bt1, Bt2, ..., Btm, one switch circuit 24B1, 24B2, ..., 24Bm, and six coils 13u11 to 13w21, 13u12 to 13w22, ..., 13ulm to 13w2m. The six coils 13u11 to 13w2m included in each divided circuit G1 to Gm are the coils selected from each of the six stators one by one.

Note that, any number of divided circuits G1 to Gm may be included as long as at least one of the coils 13u11 to 13w2m of all stator (or phase) coils 13u11 to 13w2m is included therein. Furthermore, each of the divided circuits G1 to Gm may include any number of a power source Bt1 to Btm, and switch circuits 24B1 to 24Bm, as long as one the number is one or more.

The m switch circuits 24B1 to 24Bm are circuits to control the conduction of the stator coils 13u11 to 13w2m of the divided circuits G1 to Gm to which they belong. For example, each of the switch circuits 24B1 to 24Bm is structured the same as the drive switch circuit 241 or the regeneration switch circuit 242 in the first embodiment. Note that the switch circuits 24B1 to 24Bm may be structured in the same way as the switch circuit 243 of the second embodiment, as a common circuit that can be used for both drive and regeneration, or as the switch circuits of other embodiments.

The m power sources Bt1 to Btm are connected to the coils 13u11 to 13w2m of the stator of the divided circuit G1 to Gm to which they belong, through the switch circuits 24B1 to 24Bm. As a result, the power sources Bt1 to Btm are used, during the drive of the rotating machine 1B, to supply the power to the coils 13u11 to 13w2m, and are charged, during the regeneration of the rotating machine 1B, by the regeneration power from the coils 13u1 to 13w2m. The power sources Bt1 to Btm are structured the same as the drive power sources Bd or regeneration power source Br of the first embodiment. The power sources Bt1 to Btm are provided in accordance with the switch circuits 24B1 to 24Bm. For example, if the switch circuits 24B1 to 24Bm are used as circuits that are used both for driving and for regeneration, such as the switch circuit 243 of the second embodiment, the power sources Bt1 to Btm in each of the switch circuits 24B1 to 24Bm are at least one in each for driving and for regeneration.

Next, control of the rotating machine system 10B by the control device 2B will be described.

In a normal operation, the control device 2B, as with the control device 2 of the first embodiment shown in FIG. 1, performs the drive control or the regeneration control by sending switch control signals to the switch circuits 24B1 to 24Bm. Here, the points differing from the control device 2 of the first embodiment will be mainly described.

The control device 2B monitors and controls the power sources Bt1 to Btm of divided circuits G1 to Gm. If any one of the power sources Bt1 to Btm fails, the control device 2B controls so that rotating machine system 10B continue to operate, excluding the divided circuits G1 to Gm to which the failed power source Bt1 to Btm belongs. For example, the controller 2B excludes the coils 13u11 to 13w2m of the divided circuits G1 to Gm to which the failed power sources Bt1 to Btm belong, and selects the coils to be conducted. At this time, the coils 13u11 to 13w2m to be excluded may be electrically cut by a switch or the like.

Note that when multiple power sources Bt1 to Btm are provided with one divided circuit G1 to Gm, the control device 2B may exclude the divided circuit G1 to Gm if multiple or all of the power sources Bt1 to Btm of the one divided circuit G1 to Gm fail. Furthermore, for failures of the devices other than the power sources Bt1 to Btm of the divided circuits G1 to Gm, the control device 2B may exclude the divided circuits G1 to Gm to which the failed devices belong from the operation target as with the power sources Bt1 to Btm.

According to the present embodiment, the following effects can be obtained in addition to the effects of the first embodiment.

With the divided circuits G1 to Gm which are divided electric circuits of the rotating machine system 10B formed to include at least one power source Bt1 to Btm, and at least one coil 13U11 to 13w2m for each of all stator (or phase), resistance to a failure of the rotating machine system 10B (e.g., a failure of the power sources Bt 1 to Btm failures) can be increased. Specifically, if at least one of the divided circuits G1 to Gm is normal, a voltage can be applied to all of the stator (or phases) of the rotating machine 1B.

### (Eighth embodiment)

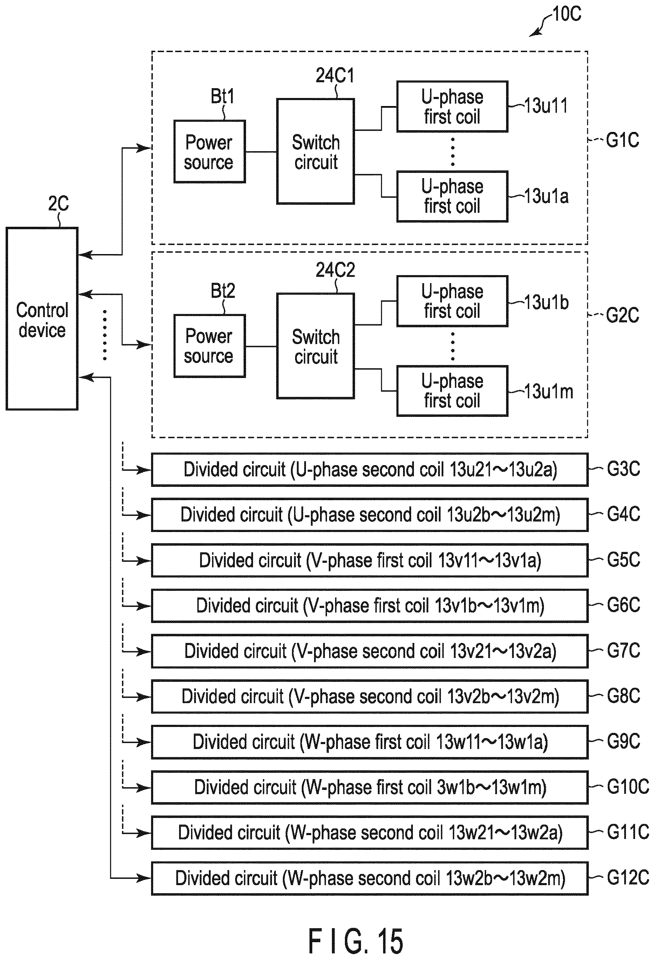

FIG. 15 is a schematic diagram of the structure of divided circuits G1C to G12C in the rotating machine system 10C of the eighth embodiment of the present invention.

The rotating machine system 10C is the rotating machine system 10B of the seventh embodiment shown in FIG. 14, wherein the grouping of the coils 13u11 to 13w2m is changed and divided circuits G1C to G12C are provided to correspond to the changed grouping while the control device 2B is replaced with the control device 2C. The other points are the same as in the seventh embodiment.

The divided circuits G1C to G12C are disposed to correspond to each of the coils 13u11 to 13w2m grouped into two for each stator. For example, if the number of coils 13u11 to 13w2m provided in each stator is an even number, the coils 13u11 to 13w2m are grouped into m/2 pieces. If the number m is odd, one group is set to the number of pieces rounded up to the nearest m/2, and the other group is set to the number of pieces rounded down to the nearest m/2.

In addition, here, the coils 13u11 to 13w2m are grouped by stator, but they may also be grouped by phase. In the following, the case where the coils are grouped by stator is mainly described, but the same applies to the case where they are grouped by phase. The grouping of the coils 13u11 to 13w2m may be grouped into three or more groups. Furthermore, each grouped group may include any number of coils 13u11 to 13w2m, but the number of coils 13u11 to 13w2m in each group may be the same number or a number close to each other, thereby making it easier to handle each group equally. As a result, the rotating machine system 10C can control at the time of stop uniformly even if any of the divided circuits G1C to G12C is stopped.

In the following, the coils 13u11 to 13w2m are divided into two groups, a and (m-a), for each stator, and a < m and B=A+1.

The divided circuits G1C, G2C, ..., G12C each include one power source Bt1, Bt2, ..., Bt12, and one switch circuit 24C1, 24C2, ..., 24C12, and one group of coils 13u11 to 13w2m, which are divided into two groups for each stator. Note that each divided circuit G1C to G12C has any number of power sources Bt1 to Bt12. Also, the switch circuits 24C1 to 24C12 may be formed in a circuit common to two or more of the divided circuits G1C to G12C.

The two divided circuits G1C and G2C each include the U-phase first coils 13u11 to 13ula, and 13ulb to 13ulm. The two divided circuits G3C and G4C each include the U-phase second coils 13u21 to 13u2a, and 13u2b to 13u2m. The two divided circuits G5C, G6C each include the V-phase first coils 13v11 to 13vla, and 13vlb to 13vlm. The two divided circuits G7C and G8C include the V-phase second coils 13v21 to 13v2a, and 13v2b to 13v2m. The two divided circuits G9C and G10C each include the W-phase first coils 13w11 to 13w1a, and 13w1b to 13w1m. The two divided circuits G11C and G12C each include the W-phase second coils 13w21 to 13w2a, and 13w2b to 13w2m.

The switch circuits 24C1 to 24C12 are, as with the switch circuits 24B1 to 24Bm of the seventh embodiment, circuits to control the conduction of the stator coils 13u11 to 13w2m of the divided circuits G1C to G12C to which they belong. The switch circuits 24C1 to 24C12 are similar to the switch circuits 24B1 to 24Bm of the seventh embodiment, except that the target coils 13u11 to 13w2m are different.

The twelve power sources Bt1 to Bt12 are, as in the seventh embodiment, connected to the stator coils 13u11 to 13w2m of the divided circuits G1C to G12C to which they belong via the switch circuits 24C1 to 24C12.

The control device 2C monitors and controls the power sources Bt1 to Bt12 of the divided circuits G1C to G12C. In other respects, the control device 2C is the same as the control device 2B of the seventh embodiment.

According to the present embodiment, the following effects can be obtained in addition to the effects of the first embodiment.

With the divided circuits G1C to G12C in which the electric circuit of the rotating machine system 10C is divided such that at least one power source Bt1 to Bt12, and one group coils 13u11 to 13w2m grouped for each stator (or for each phase) are included, the resistance to the failure of the rotating machine system 10C (e.g., failures of the power sources Bt1 to Bt12) can be increased.

Specifically, if any divided circuit G1 to Gm is stopped, by the other divided circuits G1 to Gm including the coils 13u11 to 13w2m of same stator (or same phase) of the stopped divided circuits G1 to Gm, voltage can be applied to that stator (or that phase). Thus, even if any of the divided circuits G1 to Gm stops, the alternative divided circuits G1 to Gm apply a voltage to the stator (or its phase), and the rotating machine system 10C can provide a balanced power to the rotating machine 1B.

### (Ninth embodiment)

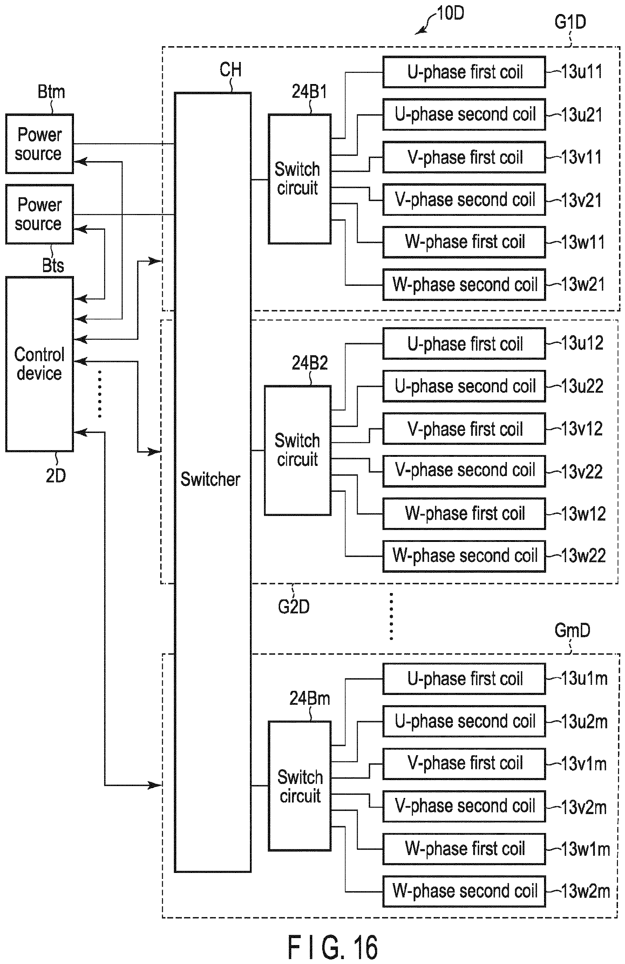

FIG. 16 is a schematic diagram illustrating the structure of divided circuits G1D to GmD of the rotating machine system 10D of the ninth embodiment of the present invention.

The rotating machine system 10D is the rotating machine system 10B of the seventh embodiment shown in FIG. 14, wherein divided circuits G1D to GmD, which are the divided circuits G1 to Gm with the power sources Bt1 to Btm removed, are provided, and a switcher CH and two power sources Btm and Bts are added, and the control device 2B is replaced with the control device 2D. The other points are the same as in the seventh embodiment.

The two power sources Btm and Bts are connected to the switch circuits 24B1 to 24Bm of all of the divided circuits G1D to GmD via the switcher CH. Note that the two power sources Btm and Bts may be separate and independent power source units, or they may be two cells mounted in one power source unit. In other respects, the power sources Btm and Bts are the same as the power sources Bt1 to Btm of the seventh embodiment.

The switcher CH is a circuit that selects one of two power sources Btm and Bts, as the power source used to control the rotating machine 1B. The switcher CH switches between the two power sources Btm and Bts to connect one of the power sources Btm and Bts to the switch circuits 24B1 to 24Bm. The switcher CH selects and connects either the power source Btm or Bts according to a switching instruction (switching signal) from the control device 2D, or controller mounted on the power sources Btm and Bts, or the both.

Now, an example of how the two power sources Btm and Bts are operated will be described.

In a normal operation, the switcher CH selects the main power source Btm. As a result, the main power source Btm is connected to the coils 13u11 to 13w2m via each of the switch circuits 24B1 to 24Bm. At this time, the sub power source Bts is in a standby state and may be charged.

When the main power source Btm is stopped, the switcher CH switches from the main power source Btm to the the sub power source Bts. As a result, the sub power source Bts is connected to the coils 13u11 to 13w2m via each of the switch circuits 24B1 to 24Bm. For example, the case of stopping the main power source Btm means that when an abnormality of the main power source Btm is detected, when the amount of electric storage (charge rate) falls below a threshold, or when the main power source Btm is stopped artificially due to inspection, etc. The switcher CH may be switched automatically by receiving a detection signal due to the detection of an abnormality or insufficient amount of electric storage by monitoring the main power source Btm, or it may be switched manually by an operator.

According to the present embodiment, the following effects can be obtained in addition to the effects of the first embodiment.

With the power sources Btm and Bts commonly used in all of the divided circuits G1D to GmD, the same effect as that of the seventh embodiment can be obtained while reducing the number of power sources. Specifically, if at least one of the divided circuits G1D to GmD is normal, voltage can be applied to all stators of rotating machine 1B. Furthermore, by providing two power sources Btm and Bts, operation continuity of the rotating machine system 10D against abnormalities of the power source Btm and Bts, etc., can be improved.

In the present embodiment, two power sources Btm and Bts are provided, but three or more power sources may be provided. Furthermore, the roles of the two power sources are defined as the main power source Btm used in normal operation and the sub power source Bts used when the main power source Btm is stopped while they may be changed. The two power sources may be used equally, or the relationship between the main and sub power sources may be switched during operation. Furthermore, direct charging and discharging may be performed between the two power sources without the need for a switcher CH, so that the amount of electric storage in each of the two power sources can be adjusted. Furthermore, the power may be supplied by the two power sources. The same applies to three or more power sources.

In the present embodiment, a structure with a common power source is described based on the rotating machine system 10B of the seventh embodiment, but the same structure may be formed based on the rotating machine system 10C of the eighth embodiment. That is, in the rotating machine system 10C shown in FIG. 15, the power sources Bt1 to Bt12 are removed from the divided circuits G1C to G12C, and a switcher CH and two power sources Btm and Bts can be added and structured in the same manner as in the present embodiment. As a result, the same effect as in the eighth embodiment can be obtained while reducing the number of power sources.

### (Tenth embodiment)

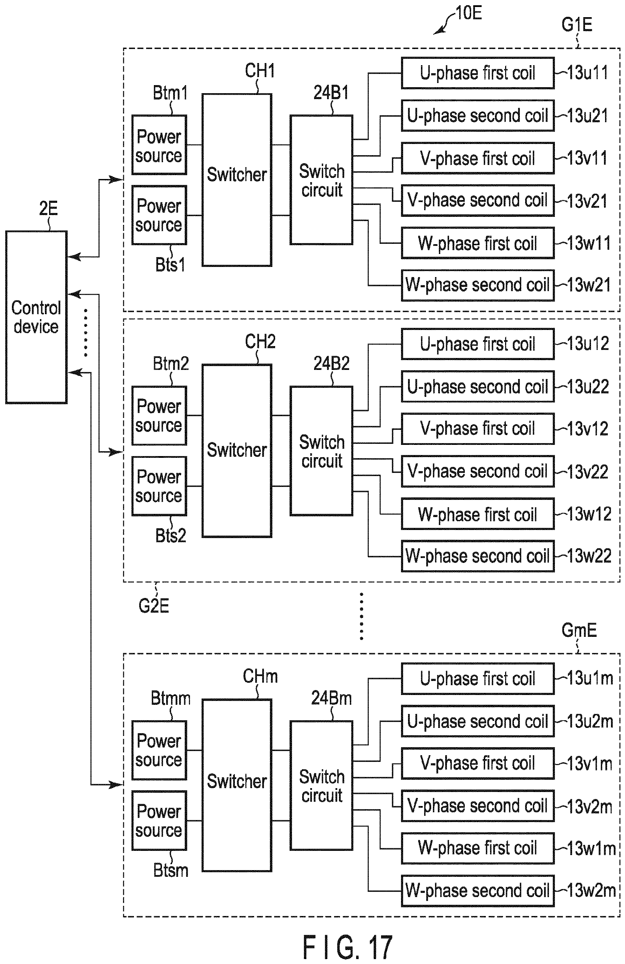

FIG. 17 is a schematic view illustrating the structure of divided circuits G1E to GmE of the rotating machine system 10E of the tenth embodiment of the present invention.

The rotating machine system 10E is a rotating machine system 10B according to the seventh embodiment shown in FIG. 14, wherein the divided circuits G1 to Gm are replaced with the divided circuits G1E to GmE, and the control device 2B is replaced with the control device 2E. The divided circuits G1E to GmE are the divided circuits G1 to Gm of the seventh embodiment, respectively, wherein one power source Bt1 to Btm is removed and, instead, two power sources Btm1, Bts1 to Btmm, and Btsm and switchers CH1 to CHm are added. The other points are the same as in the seventh embodiment.

The two power sources Btm1, Bts1 to Btmm, and Btsm are the same as the two power sources Btm and Bts of the ninth embodiment, except that they are provided with each of the divided circuits G1E to GmE. For example, the two power sources Btm1, Bts1 to Btmm, and Btsm are provided as the main power source Btm1 to Btmm and the sub power source BTs1 to Btsm. In normal operation, the main power sources Btm1 to Btmm are used, and when the main power sources Btm1 to Btmm are stopped, the sub power sources Bts1 to Btsm are used.

The switchers CH1 to CHm are similar to the switcher CH of the ninth embodiment except that they are provided with each of the divided circuits G1E to GmE. Thus, the switching conditions of the switchers CH1 to CHm are also the same as those of the ninth embodiment. For example, the switchers CH1 to CHm may be automatically switched to the sub power sources Bts1 to Btsm by detecting an abnormality or a shortage of the amount of electric storage, or may be switched manually by an operator.

According to the present embodiment, in addition to the effects of the seventh embodiment, with a plurality of power sources Btm1, Bts1 to Btm1, Bts1 to Btsm are provided in each divided circuit G1E to GmE, the operation continuity of the rotating machine system 10E against the abnormality in the power sources Btm1, Bts1 to Btmm, and Btsm, etc., can be improved more than in the seventh embodiment.

In the present embodiment, each divided circuit G1E to GmE include two power sources Btm1, Bts1 to Btmm, and Btsm, but three or more power sources may be provided. The roles of the three or more power sources may be arbitrarily set as in the ninth embodiment.

In the present embodiment, a structure based on the rotating machine system 10B of the seventh embodiment is described, but the rotating machine system 10C based on the eighth embodiment may be similarly structured. That is, in the rotating machine system 10C shown in FIG. 15, each divided circuit G1C to G12C may include a plurality of power sources and structured similarly to the present embodiment. In this way, the same effect as that of the eighth embodiment can be obtained while enhancing the operation continuity of the rotating machine system 10E.

### (Eleventh embodiment)

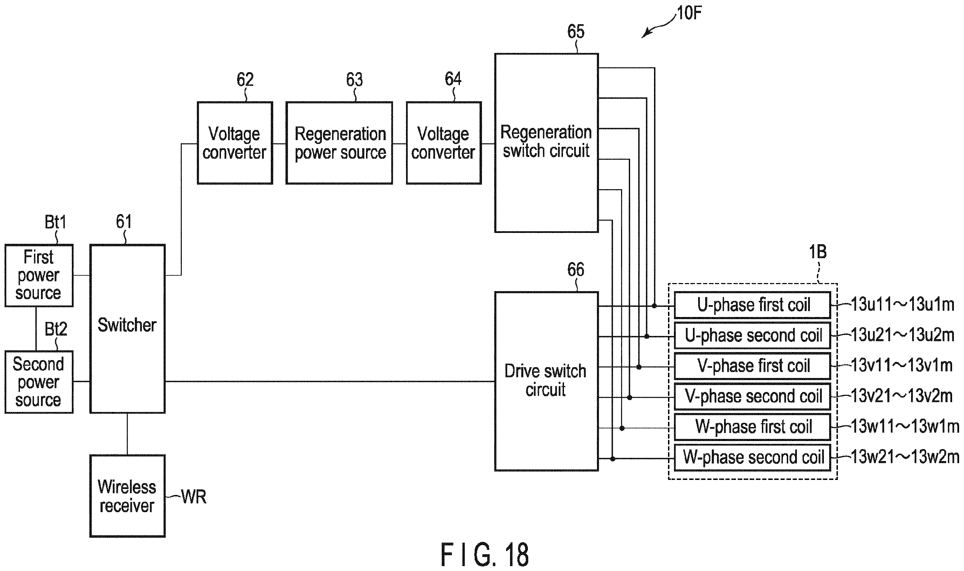

FIG. 18 is a schematic diagram illustrating the structure of the rotating machine system 10F of the eleventh embodiment of the present invention.

The rotating machine system 10F includes a rotating machine 1B, two power sources Bt1 and Bt2, switcher 61, power source side voltage converter 62, regeneration power source 63, rotating machine side voltage converter 64, regeneration switch circuit 65, drive switch circuit 66, and wireless receiver WR. The other points are the same as in the first embodiment. Here, a structure using the first embodiment as a basic structure will be mainly described, but other embodiments may be used as a basic structure.

The power source side voltage converter 62, the regeneration power source 63, the rotating machine side voltage converter 64, and the regeneration switch circuit 65 structures a brake system circuit mainly used in the regeneration operation of the rotating machine 1B. The drive switch circuit 66 structures a drive system circuit which is mainly used in the drive operation of the rotating machine 1B.

The rotating machine system 10F explained here include the rotating machine 1B of the seventh embodiment shown in FIG. 13 while any rotating machine may be used as in the first embodiment. Furthermore, a structure in which the two power sources Bt1 and Bt2 are used equally will be mainly described here, but, as in the power sources Btm and Bts of the ninth embodiment of FIG. 16, they may have a main and sub relationship, or they may be operated in any other way.

The regeneration switch circuit 65 and the drive switch circuit 66 are structured similarly to the regeneration switch circuit 242 and the drive switch circuit 241 of the first embodiment, respectively. Note that, the regeneration switch circuit 65 and the drive switch circuit 66 may be structured similarly to the switch circuit 243 of the second embodiment, that can be used for both driving and regeneration, or may be structured in the same manner as the switch circuits of other embodiments.

Note that, in FIG. 18, the regeneration switch circuit 65 and the drive switch circuit 66 are connected to all coils 13u11 to 13w2m of the rotating machine 1B. However, as in the first embodiment, a single stator coil may be connected, or as in the seventh to tenth embodiments, one group of grouped coils may be connected, or some coils other than these may be connected. In that case, a plurality of regeneration switch circuits 65 and a plurality of drive switch circuits 66 are provided to correspond to all of the coils 13u11 to 13w2m.

The regeneration switch circuit 65 operates to send the regeneration power of the rotating machine 1B to the power source Bt1 and Bt2 side. The rotating machine side voltage converter 64 converts the regeneration power from the regeneration switch circuit 65 into DC power and boost or lower the voltage so that the regeneration power source 63 is charged by the regeneration power. For example, the regeneration power source 63 is an electric double layer capacitor. The regeneration power source 63 may be any type of power source such as capacitor or secondary battery as long as is more responsive than the two power sources Bt1 and Bt2 and can charge and discharge more quickly than the two power sources Bt1 and Bt2. The power source side voltage converter 62 is designed to boost or lower the voltage from the regeneration power source 63 so as to supply the discharge energy from the regeneration power source 63 to the switcher 61.

The drive switch circuit 66, through the switcher 61, transfers the power supplied from the power sources Bt1 and Bt2 to conduct the coils 13u11 to 13w2m connected thereto. As a result, the rotating machine 1B performs drive operation.

The brake system circuit may be used during driving of the rotating machine 1B (during power running), and the drive system circuit may be used during regeneration of the rotating machine 1B. For example, the brake system circuit may charge the power sources Bt1 and Bt2 by the regeneration power source 63 during driving of the rotating machine 1B.

The switcher 61 is a circuit that selects one of the two power sources Bt1 and Bt2 as the power source used to control the rotating machine 1B. The switcher 61 has the same function and structure as the switcher CH of the ninth embodiment. In addition, the switcher 61 connects, according to the control state of the rotating machine 1B, the selected power source Bt1 or Bt2 to the brake system circuit or the drive system circuit.

The wireless receiver WR is connected to the switcher 61. For example, when the rotating machine 1B is stopped, the switcher 61 connects the wireless receiver WR to the rotating machine 1B side circuit. The wireless receiver WR wirelessly transmits power information regarding power received from the rotating machine 1B side to the outside. The power information transmitted from the wireless receiver WR is used to monitor the state of the stopped rotating machine 1B.

Note that the switcher 61 does not have to be connected to the wireless receiver WR, nor does it have a function to connect the wireless receiver WR. Instead of the wireless power receiver WR, a wired power receiving unit having an equivalent function may be provided.

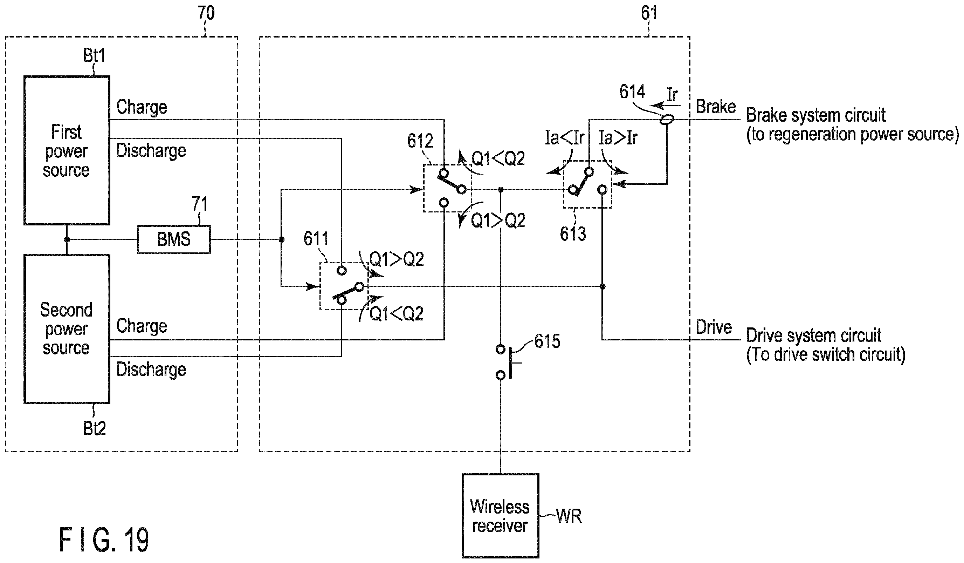

FIG. 19 is a circuit diagram illustrating the structure of the switcher 61. The structure including the switcher 61 described here is an example, and may be structured arbitrarily.

The two power sources Bt1 and Bt2 are implemented in a single power source unit 7. The two power sources Bt1 and Bt2 charge and discharge each other to adjust their respective the amounts of electric storages. A battery management system (BTS) 71 is implemented in the power source device 70. The BTS 71 transmits various signals to the switcher 61 in accordance with the amount of electric storage in each power source Bt1 and Bt2.

The switcher 61 includes a first switching switch 611, a second switching switch 612, a third switching switch 613, a current sensor 614, and a switch 615. Note that the switch 615 may not be provided.

In this example, Q1 represents the amount of electric storage in the first power source Bt1, Q2 represents the amount of electric storage in the second power source Bt2, Ir represents the amount of current flowing from the brake system circuit to the switcher 61, and Ia represents a threshold of the current of the switching condition set in the third switching switch 613.

The first switching switch 611 is a switch that selects one of the two power sources Bt1 and Bt2 as a power source to supply power to the drive system circuit. One input terminal of the first switching switches 611 is connected to the first power source Bt1 so that the discharge power from the first power source Bt1 is input. The other input terminal of the first switching switch 611 is connected to the second power source Bt2 so that the discharge power from the second power source Bt2 is input. The output terminal of the first switching switch 611 is connected to the drive system circuit.

The first switching switch 611 switches based on the signal input from the BTS 71. When the amount of electric storage in the first power source Bt1 is greater than the amount of electric storage in the second power source Bt2 (Q1>Q2), the first switching switch 611 selects the first power source Bt1. When the amount of electric storage in the first power source Bt1 is less than the amount of electric storage in the second power source Bt2 (Q1<Q2), the first switching switch 611 selects the second power source Bt2. As a result, the power source Bt1 or Bt2 with the larger amount of electric storage is selected, and the discharge power from the selected power source Bt1 or Bt2 is supplied to the drive system circuit.

The second switching switch 612 is a switch to select one of two power sources Bt1 and Bt2 as the power source to be charged by the power from the brake system circuit. One output terminal of the second switching switch 612 is connected to the first power source Bt1 so that the power from the brake system circuit is input to the first power source Bt1. The other output terminal of the second switching switch 612 is connected to the second power source Bt2 so that the power from the brake system circuit is input to the second power source Bt2. An input terminal of the second switching switch 612 is connected to the brake system circuit.

The second switching switch 612 is switched based on the signal input from the BTS 71. When the amount of electric storage in the first power source Bt1 is less than the amount of electric storage in the second power source Bt2 (Q1<Q2), the second switching switch 612 selects the first power source Bt1. When the amount of electric storage in the first power source Bt1 is greater than the amount of electric storage of the second power source Bt2 (Q1>Q2), the first switching switch 612 selects the second power source Bt2. Thus, the power source Bt1 or Bt2 with the smaller amount of electric storage is selected, and the power is supplied from the brake system circuit to charge the selected power source Bt1 or Bt2.

The current sensor 614 is a sensor that detects an amount of current Ir input from the brake system circuit. The current sensor 614 outputs the detected current amount Ir to the third switching switch 613.

The third switching switch 613 is a switch that selects one of the paths to be supplied to the power sources Bt1 and Bt2 or to the drive system circuit as a route for supplying power from the brake system circuit. One output terminal of the third switching switch 613 is connected to an input terminal of the second switching switch 612. The other output terminal of the third switching switch 613 is connected to the drive system circuit. An input terminal of the third switching switch 613 is connected to the brake system circuit.

The third switching switch 613 is switched based on the detection signal from the current sensor 614. When the amount of current from the brake system circuit is less than a threshold value (Ia<Ir), the third switching switch 613 selects the path to be supplied to the power sources Bt1 and Bt2. If the amount of current from the brake system circuit is greater than the threshold (Ia>Ir), the third switching switch 613 selects the drive system circuit. This prevents damage to the power sources Bt1 and Bt2 due to excessive current from the brake system circuit.

Specifically, when an excessive current is input from the brake system circuit, a loop circuit is formed through the drive system circuit, and the current is discharged by the coils 13u11 to 13w2m of the rotating machine 1B. As a result, the power sources Bt1 and Bt2 are protected from overcharge or overcurrent, etc. Note that the threshold value Ir may be a variable value that varies according to the amount of electric storage or the like in the power sources Bt1 and Bt2.

The switch 615 is a switch for connecting the brake system circuit to the wireless receiver WR. One terminal of the switch 615 is connected to a path connecting an input terminal of the second switching switch 612 and one output terminal of the third switching switch 613. The other terminal of the switch 615 is connected to a terminal for connecting to the wireless receiver WR. When the rotating machine 1B is in operation, the switch 615 electrically disconnects the pathway. When the rotating machine 1B is stopped, the switch 615 connects the contacts so that the pathway is electrically formed. Thus, a pathway for power from the stopped rotating machine 1B to be transmitted to the wireless receiver WR is formed.

According to the present embodiment, in addition to the effect of the first embodiment, the power source 63 for regeneration can be provided in the brake system circuit separately from the power sources Bt1 and Bt2, and thus, the power efficiency of the rotating machine system 10F is improved.

### (Twelfth embodiment)

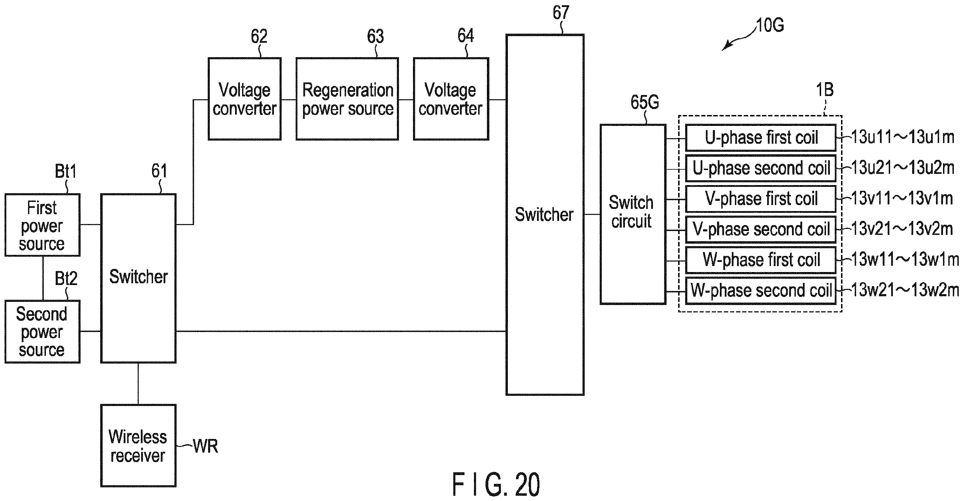

FIG. 20 is a schematic diagram illustrating the structure of the rotating machine system 10G of the twelfth embodiment of the present invention.

The rotating machine system 10G is the rotating machine system 10F according to the eleventh embodiment shown in FIG. 18, wherein a switch circuit 65G is provided in place of the regeneration switch circuit 65 and the drive switch circuit 66, and a switcher 67 is added. The other points are the same as in the eleventh embodiment.

The switcher 67 selects either the drive system circuit or the brake system circuit, and connects the selected circuit to the switch circuit 65G. When the rotating machine 1B is drive controlled, the switcher 67 selects the drive system circuit. When the rotating machine 1B is brake controlled, the switcher 67 selects the brake system circuit. For example, the switcher 67 is switched by a command from the main control unit 21 of the first embodiment shown in FIG. 1. Note that the switching of the switcher 67 may be performed automatically, manually, or in any other way.

The switch circuit 65G is a switch circuit that is used both for drive and for regeneration. For example, the switch circuit 65G is structured in the same manner as the switch circuit for the second embodiment shown in FIG. 2. In FIG. 20, the structure in which the switch circuit 65G is connected to all coils 13u11 to 13w2m of the rotating machine 1B is shown, but as in the eleventh embodiment, a part of a plurality of the divided coils 13u11 to 13w2 may be connected. In that case, a plurality of switch circuits 65G are provided to correspond to all of the coils 13u11 to 13w2m.

According to the present embodiment, by providing a switch circuit 65G that can be used both for drive and for regeneration, the overall cost for the rotating machine system 10G can be reduced, and the same effect as that of the eleventh embodiment can be obtained.

The present invention is not limited to the above-described embodiment, and constituent elements may be deleted, added, modified and the like. In addition, the constituent elements in more than one embodiment may be combined, replaced or the like to constitute a new embodiment. Even if such an embodiment is directly different from the above-described embodiment, the embodiment having the same spirit as the present invention is considered as being explained as the embodiment of the present invention, and explanation is omitted.

## Claims

1. A rotating machine system **characterized by** comprising:
a rotating machine including a plurality of coils individually conducted in a plurality of phases, respectively;
an operation direction determination means of determining an operation direction of the rotating machine to a driving direction or a braking direction;
a drive coil number determination means of determining a number of coils in each phase based on a drive operation instruction value when the operation direction determined by the operation direction determination means is the driving direction;
a drive coil selection means of selecting the coils of the number of coils determined by the drive coil number determination means from the plurality of coils in each phase;
a drive control means of conducting the coils selected by the drive coil selection means to perform drive control of the rotating machine; and
a brake control means of performing brake control of the rotating machine based on a brake operation instruction value when the operation direction determined by the operation direction determination means is the braking direction.

2. The rotating machine system of claim 1, **characterized in that** a drive circuit to control conducting of the coil for performing the drive control by the drive control means, and a brake circuit to control conducting of the coil for performing the brake control by the brake control means are a common circuit.

3. The rotating machine system of claim 1, **characterized in that**
the drive coil number determination means determines the number of coils in each phase based on a drive torque instruction value included in the drive operation instruction value, and
the drive control means conducts the coils of the number of coils determined by the drive coil number determination means to perform the drive control such that a torque of the rotating machine follows the drive torque instruction value.

4. The rotating machine system of claim 1, **characterized by** further comprising:
a brake coil number determination means of determining a number of coils in each phase based on a brake operation instruction value when the operation direction determined by the operation direction determination means is the braking direction; and
a brake coil selection means of selecting the coils of the number of coils determined by the brake coil number determination means from the plurality of coils in each phase, wherein
the brake control means conducts the coils selected by the brake coil selection means to perform the brake control.

5. The rotating machine system of claim 4, **characterized in that**
the brake coil number determination means determines the number of coils in each phase based on a brake torque instruction value included in the brake operation instruction value, and
the brake control means performs the brake control such that a torque of the rotating machine follows the brake torque instruction value.

6. The rotating machine system of claim 1, **characterized in that**
the rotating machine is an electric motor, and
the brake control means performs regeneration control to regenerate the electric motor.

7. The rotating machine system of claim 1, **characterized in that**
the rotating machine is a generator, and
the drive control means performs generation control to causes the generator to generate electricity.

8. The rotating machine system of claim 6, **characterized in that** the brake control means generates regeneration power from all of the coils.

9. The rotating machine system of claim 8, **characterized by** further comprising a rectifier circuit to convert the regeneration power from the electric motor into direct current power.

10. The rotating machine system of claim 6, **characterized by** further comprising a booster circuit to boost the regeneration power from the electric motor.

11. The rotating machine system of claim 6, **characterized by** further comprising:
a brake coil number determination means of determining a number of coils in each phase based on the brake operation instruction value when the operation direction determined by the operation direction determination means is the braking direction; and
a brake coil selection means of selecting the coils of the number of coils determined by the brake coil number determination means from the plurality of coils in each phase, wherein
the brake control means conducts the coils selected by the brake coil selection means to boost the regeneration power by the electric motor.

12. The rotating machine system of claim 11, **characterized in that**
the brake coil number determination means determines the number of coils in each phase by ΔΣ modulation based on the brake operation instruction value.

13. The rotating machine system of claim 11, **characterized in that** the brake coil selection means selects the coils of the number of coils in each phase through a noise shaping dynamic element matching method.

14. The rotating machine system of claim 1, **characterized by** further comprising a fault coil detection means of detecting a failure of each coil of the rotating machine, wherein
the drive coil selection means does not select the failed coil detected by the fault coil detection means.

15. The rotating machine system of claim 14, **characterized by** further comprising a fault coil detection means of detecting a failure of each coil of the rotating machine, wherein
the drive coil selection means newly selects one or more coils instead of the failed coil detected by the fault coil detection means to compensate the magnetic flux supposed to be generated by the failed coil.

16. The rotating machine system of claim 1, **characterized by** further comprising a power source provided with each group to conduct the coils therein, where all of the coils of the rotating machine is divided into a plurality of groups, and each group includes coils of all phases.

17. The rotating machine system of claim 1, **characterized by** further comprising a power source provided with each group to conduct the coils therein, where the coils are divided into a plurality of groups by each phase of the rotating machine.

18. The rotating machine system of claim 1, **characterized by** further comprising a drive circuit provided with each group to control the conducting of the coils for the drive control by the drive control means, where all of the coils of the rotating machine is divided into a plurality of groups, and each groups includes coils of all phases.

19. The rotating machine system of claim 1, **characterized by** further comprising a drive circuit provided with each group to control the conducting of the coils for the drive control by the drive control means, where the coils are divided into a plurality of groups by each phase of the rotating machine.

20. The rotating machine system of claim 1, **characterized by** further comprising:
a power source to conduct the coils; and
a regeneration power source which is separated from the power source in order to charge regeneration power from the rotating machine.

21. The rotating machine system of claim 1, **characterized by** further comprising:
a plurality of power sources to conduct the coils; and
a switching means of switching the power sources to select a power source to conduct the coils from the plurality of power sources.

22. A rotating machine control apparatus which controls a rotating machine with a plurality of coils individually conducted in a plurality of phases, the apparatus **characterized by** comprising:
an operation direction determination means of determining an operation direction of the rotating machine to a driving direction or a braking direction;
a drive coil number determination means of determining a number of coils in each phase based on a drive operation instruction value when the operation direction determined by the operation direction determination means is the driving direction;
a drive coil selection means of selecting the coils of the number of coils determined by the drive coil number determination means from the plurality of coils in each phase;
a drive control means of conducting the coils selected by the drive coil selection means to perform drive control of the rotating machine; and
a brake control means of performing brake control of the rotating machine based on a brake operation instruction value when the operation direction determined by the operation direction determination means is the braking direction.

23. A rotating machine control method for controlling a rotating machine with a plurality of coils individually conducted in a plurality of phases, the method **characterized by** comprising:
determining an operation direction of the rotating machine to a driving direction or a braking direction;
determining a number of coils in each phase based on a drive operation instruction value when the determined operation direction is the driving direction;
selecting the coils of the determined number of coils from the plurality of coils in each phase;
conducting the selected coils to perform drive control of the rotating machine; and
performing brake control of the rotating machine based on a brake operation instruction value when the determined operation direction is the braking direction
